# FASCICULE DE BREVET EUROPEEN

(11) **EP 2 034 543 B1**
(45) Date de publication et mention de la délivrance du brevet: **12.10.2011**
(21) Numéro de dépôt: 08162358.9
(22) Date de dépôt: 14.08.2008
(51) Int. Cl.: H01M 4/48, H01M 10/26

(54) **Générateur électrochimique au lithium fonctionnant avec un électrolyte aqueux**
Elektrochemischer Generator auf Lithiumbasis, der mit einem wässrigen Elektrolyt funktioniert
Lithium electrochemical generator operating with an aqueous electrolyte

(30) Priorité: 24.08.2007 FR 0757169
(43) Date de publication de la demande: 11.03.2009
(73) Titulaire: Commissariat à l'Énergie Atomique et aux Énergies Alternatives, 75015 Paris (FR)
(72) Inventeur: MARTINET, Sébastien, 38000, GRENOBLE (FR); LIGNIER, Hélène, 38380, SAINT LAURENT DU PONT (FR)
(74) Mandataire: Ilgart, Jean-Christophe

(56) Documents cités:
- WANG ET AL: "Improvement of cycle performance of lithium ion cell LiMn2O4/LixV2O5 with aqueous solution electrolyte by polypyrrole coating on anode" ELECTROCHIMICA ACTA, ELSEVIER SCIENCE PUBLISHERS, BARKING, GB, vol. 52, no. 15, 28 mars 2007 (2007-03-28), pages 5102-5107, XP022004243 ISSN: 0013-4686
- WANG ET AL: "Aqueous rechargeable lithium battery (ARLB) based on LiV3O8 and LiMn2O4 with good cycling performance" ELECTROCHEMISTRY COMMUNICATION, ELSEVIER, AMSTERDAM, NL, vol. 9, no. 8, août 2007 (2007-08), pages 1873-1876, XP022158299 ISSN: 1388-2481
- WANG ET AL: "Characteristics of an aqueous rechargeable lithium battery (ARLB)" ELECTROCHIMICA ACTA, ELSEVIER SCIENCE PUBLISHERS, BARKING, GB, vol. 52, no. 15, 28 mars 2007 (2007-03-28), pages 4911-4915, XP022004218 ISSN: 0013-4686
- MANICKAM ET AL: "Redox behavior and surface characterization of LiFePO4 in lithium hydroxide electrolyte" JOURNAL OF POWER SOURCES, ELSEVIER, AMSTERDAM, NL, vol. 158, no. 1, 14 juillet 2006 (2006-07-14), pages 646-649, XP005506449 ISSN: 0378-7753
- WANG G X ET AL: "Secondary aqueous lithium-ion batteries with spinel anodes and cathodes" JOURNAL OF POWER SOURCES, ELSEVIER, AMSTERDAM, NL, vol. 74, no. 2, 1 août 1998 (1998-08-01), pages 198-201, XP004129511 ISSN: 0378-7753

## Description

### DOMAINE TECHNIQUE

La présente invention a trait à un générateur électrochimique au lithium, comprenant un électrolyte aqueux à base d'ions lithium.

Les générateurs de l'invention permettent ainsi de s'affranchir des contraintes lourdes concernant l'utilisation d'électrolytes organiques ainsi que d'apporter une augmentation significative des performances de puissance.

Ces générateurs trouvent leur application dans de nombreux domaines, notamment dans l'alimentation des systèmes embarqués de faible épaisseur, comme les cartes de crédit, les étiquettes intelligentes, dans l'alimentation des téléphones mobiles ou encore dans l'alimentation des véhicules électriques.

### ÉTAT DE LA TECHNIQUE ANTÉRIEURE

Les générateurs électrochimiques au lithium fonctionnent sur le principe d'insertion/désinsertion (ou intercalation/désintercalation) simultanée de lithium au sein des électrodes positive et négative.

Plus précisément, la réaction électrochimique à l'origine de la production de courant met en jeu le transfert, par l'intermédiaire d'un électrolyte conducteur d'ions lithium, de cations lithium provenant d'une électrode négative qui viennent s'intercaler dans le réseau accepteur de l'électrode positive, les ions lithium transitant par un électrolyte conducteur d'ions lithium.

Généralement, l'électrode négative est à base d'un matériau carboné, tel que du graphite, et est le siège d'une réaction d'intercalation du lithium, en processus de charge.

L'électrode positive, quant à elle, est à base d'un oxyde de métal de transition lithié (le métal pouvant être, par exemple, du cobalt, du nickel, du manganèse) et est le siège d'une réaction de désintercalation du lithium, en processus de charge.

Un séparateur assure la séparation physique entre l'électrode négative et l'électrode positive. Il comporte classiquement un film microporeux, par exemple en polyolefine tel que le polyéthylène, le polypropylène, d'une épaisseur pouvant aller de 20 à 25 µm, lequel film microporeux est imprégné d'un électrolyte liquide.

L'électrolyte liquide doit assurer la condition des ions lithium de l'électrode positive vers l'électrode négative lors du processus de charge et vice versa lors du processus de décharge (c'est-à-dire en processus de fonctionnement). Cet électrolyte se présente classiquement sous la forme d'un sel de lithium dissous dans un solvant organique, généralement de la famille des carbonates.

Ce type d'électrolyte présente une forte sensibilité à l'eau. Les accumulateurs les comprenant doivent donc être assemblés dans des conditions drastiques, avec un fort contrôle de l'humidité ambiante, ce contrôle s'opérant classiquement dans des salles blanches.

Qui plus est, les électrolytes à base de solvant organique présentent une conductivité très limitée (de l'ordre de 10⁻² S/cm) et nécessite, de ce fait, l'utilisation en tant que support, de films microporeux très fins, afin de limiter la résistance électrolytique de l'accumulateur, laquelle est proportionnelle au produit de l'épaisseur du film et de l'inverse de la conductivité.

Ainsi, les accumulateurs de lithium fonctionnant avec un électrolyte à base de solvant organique présentent des performances relativement limitées en puissance.

Pour contrer les inconvénients liés à l'utilisation d'un électrolyte à base de solvant organique, certains auteurs ont pensé à remplacer le solvant organique par de l'eau. Les réalisations mises en oeuvre ont préconisé l'utilisation de solutions aqueuses présentant un pH allant de 6 à 10. Il a été constaté des réalisations de l'art antérieur les inconvénients suivants :
- un dégagement d'hydrogène trop important pour ces valeurs de pH ;
- l'utilisation indispensable d'électrodes négatives à fort potentiel, et par voie de conséquence, une tension générée à la sortie de cellule faible.

Dans Journal of Power Sources, vol. 74 (1998), p. 198-201 est décrit une batterie secondaire à ions lithium comprenant en tant qu'anodes, des anodes en Li₂Mn₄O₉ ou Li₄Mn₅O₁₂ et, en tant que cathodes, des cathodes en LiMn₂O₄ et un électrolyte aqueux comprenant du LiNO₃ 6 M et 0,0015 M de OH⁻.

Il existe donc un véritable besoin pour des générateurs électrochimiques au lithium fonctionnant avec des électrolytes aqueux, où le risque lié à un dégagement important d'hydrogène est limité et où il est possible d'utiliser des électrodes négatives à plus faible potentiel que les générateurs classiquement utilisés, de façon à augmenter la tension générée en sortie de cellule.

### EXPOSÉ DE L'INVENTION

Ainsi, l'invention a trait à un générateur électrochimique au lithium selon la revendication 1.

On précise, dans ce qui précède et ce qui suit, que les potentiels sont exprimés par rapport au couple de référence Li⁺/Li. Ce couple présente un potentiel d'oxydo-réduction de -3,02 V par rapport à l'électrode normale à hydrogène (ENH).

Avant d'entrer plus en détail dans la description, nous proposons les définitions suivantes.

Par électrode positive, on entend l'électrode qui capte des électrons et génère des cations (en l'occurrence, ici, des cations Li⁺), lorsque le générateur est en régime de décharge.

Par électrode négative, on entend l'électrode qui génère des électrons et capte des cations (en l'occurrence, ici, des cations Li⁺), lorsque le générateur est en régime de décharge.

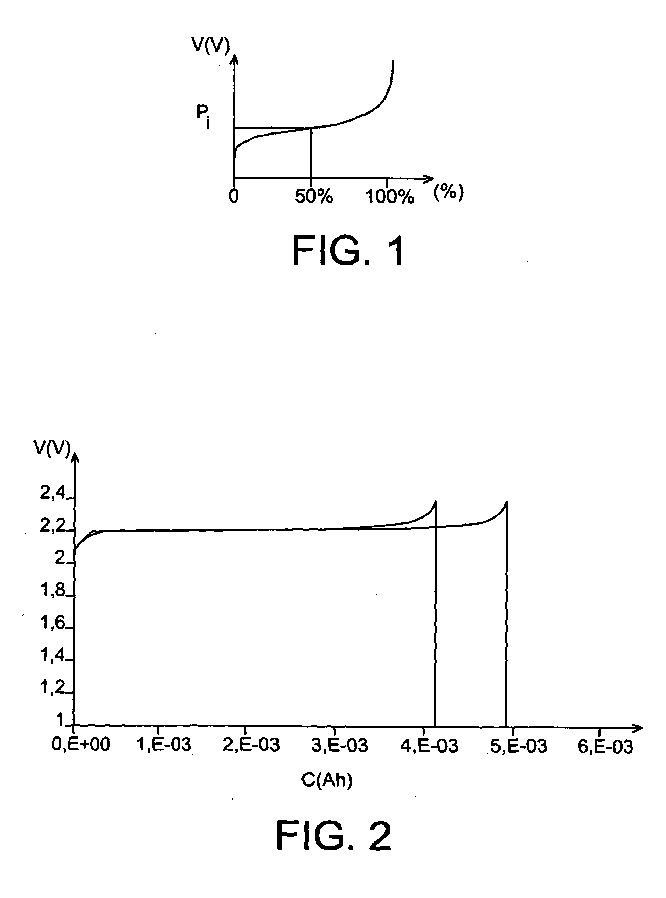

Par potentiel d'intercalation du lithium, on entend le potentiel thermodynamique d'équilibre d'un matériau (en l'occurrence, ici, le matériau constitutif de l'électrode négative ou positive), lorsque ce matériau est lithié à 50%. Cette valeur est déterminée à partir d'une courbe de référence représentant la valeur de potentiel V (exprimée en volts) en fonction de x (x représentant le taux d'intercalation du lithium dans le matériau), le potentiel d'intercalation correspond à la valeur de potentiel sur la courbe pour x=50%. Une courbe de ce type est représentée sur la figure 1, le potentiel d'intercalation étant symbolisé sur cette courbe par le symbole Pᵢ.

Le pH est mesuré classiquement avec un pH-mètre étalonné avec des solutions étalons commerciales.

Les inventeurs en jouant à la fois sur le pH de l'électrolyte et sur la nature des électrodes, ont obtenu ainsi des générateurs présentant les avantages suivants :
- un faible dégagement d'hydrogène en cours de fonctionnement, ce qui limite les risques inhérents d'explosion aux générateurs, où le dégagement d'hydrogène est plus important ;
- une tension délivrée à la sortie de chaque cellule plus importante (celle-ci étant, au minimum, de 1,2 V) générée par l'utilisation concomitante d'électrodes positives présentant un potentiel d'intercalation du lithium important et d'électrodes négatives présentant un potentiel d'intercalation du lithium plus faible.

Selon l'invention, l'électrode positive comprend, un matériau choisi parmi les oxydes de lithium à structure olivine de formule générale LiMPO₄, où M est choisi parmi Fe, Mn, Ni et Co et les mélanges de ceux-ci.

En particulier, l'électrode positive peut comprendre LiFePO₄, le potentiel d'intercalation du lithium étant, dans ce cas de figure, de l'ordre de 3,45 V. Une partie des atomes de fer peut être substitué par un élément M' choisi parmi les métaux de transition, tels que Mn, Ni, Co, auquel cas l'électrode positive comprendra un matériau du type LiFeM'PO₄.

Selon l'invention, l'électrode négative comprend un matériau choisi parmi les titanates de lithium, l'oxyde de titane TiO₂ et les mélanges de ceux-ci.

En particulier, l'électrode négative peut comprendre Li₄Ti₅O₁₂, le potentiel d'intercalation du lithium de ce matériau étant, dans ce cas de figure, de l'ordre de 1,55 V.

Outre les matériaux constitutifs des électrodes positives et négatives susmentionnées, les électrodes peuvent comprendre également du noir de carbone, des fibres et des liants (polymères cellulosiques, élastomères).

Les électrodes positives et négatives peuvent comprendre également un collecteur de courant, par exemple, en nickel, se présentant classiquement sous forme d'une feuille sur laquelle est déposée l'électrode.

Ainsi, des générateurs électrochimiques conformes à l'invention peuvent être des générateurs comprenant, dans chaque cellule :
- une électrode positive comprenant LiFePO₄ et une électrode négative comprenant Li₄Ti₅O₁₂, générant ainsi en sortie de cellule une tension de 1,9 V ; ou
- une électrode positive comprenant LiFePO₄ et une électrode négative comprenant TiO₂, générant ainsi en sortie de cellule une tension de 1,85 V.

Selon l'invention, l'électrolyte présente un pH d'au moins 14, de préférence supérieur à 15, cet électrolyte résultant de la dissolution d'un sel de lithium, tel que LiOH, dans l'eau.

Outre la dissolution d'un sel de lithium, l'électrolyte peut résulter également avantageusement de la dissolution d'une base forte, tel que NaOH et/ou KOH, l'électrolyte comprenant ainsi, en outre, une solution de soude et/ou de potasse. Avec l'adjonction de bases fortes de ce type, il est ainsi plus aisé d'atteindre des valeurs de pH au moins égales à 14, de préférence supérieures à 15.

En travaillant à de telles valeurs de pH, le potentiel de dégagement d'hydrogène (évalué à 2,214 V pour une valeur de pH de 14) est diminué, de façon substantielle, par rapport aux réalisations de l'art antérieur fonctionnant à des pH allant de 6 à 10 (amenant les valeurs de potentiels de dégagement d'hydrogène à des valeurs respectives de 2,686 V et 2,55 V). Ainsi, le dégagement d'hydrogène étant moindre, on diminue de façon notoire les risques inhérents au dégagement de ce gaz.

Grâce également à la diminution du potentiel de dégagement d'hydrogène, il est possible d'utiliser des électrodes négatives présentant un potentiel d'intercalation plus faible que celles de l'art antérieur et ainsi de générer une tension en sortie de cellule plus importante.

L'électrolyte liquide est avantageusement supporté par un film polymérique, en particulier, un film en polyoléfine, tel que le polyéthylène et le polypropylène.

Les générateurs électrochimiques au lithium de l'invention peuvent être préparés classiquement par un procédé comprenant les étapes suivantes :
- une étape de réalisation d'un empilement comprenant respectivement une électrode positive, un séparateur et une électrode négative, l'électrode positive et l'électrode négative répondant aux définitions données ci-dessus ;
- une étape d'imprégnation dudit séparateur par un électrolyte liquide tel que défini précédemment.

L'invention va maintenant être décrite par rapport à l'exemple suivant donné à titre illustratif et non limitatif.

### BREVE DESCRIPTION DE LA FIGURE

La figure 1 illustre une courbe type représentent le potentiel V (en V) d'un matériau en fonctions du taux d'intercalation x du lithium (en %) dans ledit matériau, le point Pᵢ représentant le potentiel d'intercalation du lithium dans ledit matériau (pour x = 50%).

La figure 2 illustre les courbes de charge à courant constant (1mA) des deux premiers cycles de l'accumulateur préparé selon l'exemple ci-dessous

### EXPOSÉ DÉTAILLÉ DE MODES DE RÉALISATION PARTICULIERS

### EXEMPLE

Cet exemple illustre la préparation d'un générateur électrochimique au lithium comprenant respectivement :
- une électrode positive comprenant LiFePO₄ ;
- une électrode négative comprenant Li₄Ti₅O₁₂ ;
- un électrolyte liquide consistant en une solution aqueuse de LiOH de concentration 4M.

La préparation susmentionnée comprend respectivement :
a) une étape de préparation des électrodes ;
b) une étape de préparation de l'électrolyte liquide ;
c) une étape de réalisation de l'empilement de façon à générer un empilement électrode positive-électrolyte-électrode négative.

### a) Préparation des électrodes

Les réactifs pour la préparation des électrodes sont les suivants :
- une poudre de LiFePO₄ pour l'électrode positive et une poudre de Li₄Ti₅O₁₂ pour l'électrode négative ;
- une poudre de noir de carbone Super P (fourni par Timcal) ;
- des fibres (fournies par Toho Tenax GmbH) ;
- une solution de CMC (carboxyméthyl cellulose) à 2% (fournie par Aldrich) ;
- une solution de NBR (caoutchouc nitrile-butadiène) à 41% (fournie par PolymerLatex GmbH),
lesdits réactifs étant respectivement présents en les proportions massiques suivantes : 92%, 2%, 2%, 2% et 2%.

Que ce soit pour l'électrode positive ou l'électrode négative, le protocole est le suivant :
- pesée des poudres et des fibres puis mélangeage de l'ensemble avec une spatule ;
- pesée et ajout de la solution de CMC à 2%, mélangeage à la spatule puis agitation au disperseur pendant une durée d'environ 20 à 30 minutes ;
- pesée et ajout de la solution de NBR à 41% puis agitation au disperseur pendant une durée de 1 à 2 minutes ;
- enduction du mélange résultant sur une feuille microperforée de nickel.

### b) Préparation de l'électrolyte

La solution préparée est une solution de lithine 4M.

Pour ce faire, 167,84 g de LiOH sont dissous dans 1 L d'eau distillée dans une fiole jaugée, la dissolution étant facilitée par une agitation magnétique.

Le pH de la solution est supérieur à 14.

### c) Réalisation de l'empilement

L'accumulateur est réalisé par empilement de l'électrode positive, d'un séparateur et de l'électrode négative, le séparateur étant du Viledon® (fourni par Freudenberg) à base de fibres de polypropylène.

L'ensemble résultant est ensuite imprégné sous vide par l'électrolyte préparé précédemment.

L'accumulateur est testé électriquement sur un banc de cyclage du type Arbin.

Les courbes de charge à courant constant (1 mA) des deux premiers cycles de l'accumulateur sont représentés sur la figure 2, la tension d'arrêt étant de 2,4 V.

Au bout du deuxième cycle, la capacité chargée est de 5 mAh, ce qui correspond à plus de 60% de la capacité nominale théorique de l'accumulateur.

## Revendications

1. Générateur électrochimique au lithium comprenant au moins une cellule comprenant :
- une électrode positive ;
- une électrode négative ; et
- un électrolyte consistant en une solution aqueuse d'un sel de lithium ;
**caractérisé en ce que** l'électrolyte présente un pH d'au moins 14, l'électrode positive présente un potentiel d'intercalation du lithium supérieur à 3,4 V, cette électrode positive comprenant un matériau choisi parmi les oxydes de lithium à structure olivine de formule générale LiMPO₄, où M est choisi parmi Fe, Mn, Ni et Co et les mélanges de ceux-ci et l'électrode négative présente un potentiel d'intercalation du lithium inférieur à 2,2 V, cette électrode négative comprenant un matériau choisi parmi les titanates de lithium, l'oxyde de titane TiO₂ et les mélanges de ceux-ci.

2. Générateur électrochimique selon la revendication 1, dans lequel l'électrode positive comprend LiFePO₄.

3. Générateur électrochimique selon la revendication 1, dans lequel l'électrode négative comprend Li₄Ti₅O₁₂.

4. Générateur électrochimique selon l'une quelconque des revendications précédentes, comprenant :
- une électrode positive comprenant LiFePO₄ et une électrode négative comprenant Li₄Ti₅O₁₂ ; ou
- une électrode positive comprenant LiFePO₄ et une électrode négative comprenant TiO₂.

5. Générateur électrochimique selon l'une quelconque des revendications précédentes, dans lequel le sel de lithium est LiOH.

6. Générateur électrochimique selon l'une quelconque des revendications précédentes, dans lequel l'électrolyte comprend, en outre, une solution aqueuse de soude et/ou de potasse.

7. Générateur électrochimique selon l'une quelconque des revendications précédentes, dans lequel l'électrolyte est supporté par un film polymérique.

8. Générateur électrochimique selon la revendication 7, dans lequel le film polymérique est en polyoléfine.

## Claims

1. Lithium battery comprising at least a cell comprising:
- a positive electrode,
- a negative electrode, and
- an electrolyte consisting of an aqueous solution of a lithium salt,
**characterized in that** the electrolyte has a pH of at least 14, the positive electrode has a lithium intercalation potential greater than 3.4 V, this positive electrode comprising a material chosen from lithium oxides with an olivine structure of the general formula LiMPO₄, where M is chosen from Fe, Mn, Ni and Co and mixtures thereof, and the negative electrode has a lithium intercalation potential less than 2.2 V, this negative electrode comprising a material chosen from lithium titanates, titanium oxide TiO₂ and mixtures thereof.

2. Battery according to Claim 1, wherein the positive electrode comprises LiFePO₄.

3. Battery according to Claim 1, wherein the negative electrode comprises Li₄Ti₅O_{12.}

4. Battery according to any one of the preceding claims, comprising:
a positive electrode comprising LiFePO₄ and a negative electrode comprising Li₄Ti₅O₁₂, or
- a positive electrode comprising LiFePO₄ and a negative electrode comprising TiO₂.

5. Battery according to any one of the preceding claims, wherein the lithium salt is LiOH.

6. Battery according to any one of the preceding claims, wherein the electrolyte further comprises an aqueous soda and/or potash solution.

7. Battery according to any one of the preceding claims, wherein the electrolyte is supported by a polymer film.

8. Battery according to Claim 7, wherein the polymer film is of polyolefin.

## Patentansprüche

1. Elektrochemischer Generator auf Lithium-Basis, mit wenigstens einer Zelle umfassend
- eine positive Elektrode;
- eine negative Elektrode; sowie
- einen aus einer wässrigen Lösung eines Lithiumsalzes bestehenden Elektrolyten;
**dadurch gekennzeichnet, dass** der Elektrolyt einen pH-Wert von wenigstens 14 aufweiset, daß die positive Elektrode ein Lithium- Einbau-bzw. -Einlagerungspotential von über 3,4 V besitzt, wobei diese positive Elektrode ein Material aufweist, das unter den Lithium-Oxyden mit Olivin-Struktur der allgemeinen Formel LiMPO₄ gewählt ist, worin M unter Fe, Mn, Ni, und Co sowie den Gemischen dieser gewählt ist, und daß die negative Elektrode ein Lithium-Einbau-bzw.-Einlagerungspotential kleiner als 2,2 V besitzt, und wobei diese negative Elektrode ein Material umfaßt, das unter Lithiurntitanaten, Titanoxyd TiO₂ sowie Gemischen dieser gewählt ist.

2. Elektrochemischer Generator nach Anspruch 1, bei welchem die positive Elektrode LiFePO₄ umfaßt.

3. Elektrochemischer Generator nach Anspruch 1, bei welchem die negative Elektrode Li₄Ti₅O₁₂ umfaßt.

4. Elektrochemischer Generator nach einem beliebigen der vorhergehenden Ansprüche, welcher umfaßt:
- eine Li₄Ti₅O₁₂ aufweisende negative Elektrode, oder
- eine LiFePO₄ aufweisende positive Elektrode und eine TiO₂ aufweisende negative Elektrode.

5. Elektrochemischer Generator nach einem beliebigen der vorhergehenden Ansprüche, in welchem das Lithiumsalz LiOH ist.

6. Elektrochemischer Generator nach einem beliebigen der vorhergehenden Ansprüche, in welchem der Elektrolyt des weiteren eine wässrige Lösung von Natriumcarbonat und/oder von Kaliumkarbonat aufweist.

7. Elektrochemischer Generator nach einem beliebigen der vorhergehenden Ansprüche, in welchem der Elektrolyt in einem Polymerfilm untergebracht ist.

8. Elektrochemischer Generator nach Anspruch 7, in welchem der Polymerfilm ein Polyolefin ist.
